# EUROPÄISCHE PATENTSCHRIFT

(11) **EP 2 982 895 B1**
(45) Veröffentlichungstag und Bekanntmachung des Hinweises auf die Patenterteilung: **09.08.2017**
(21) Anmeldenummer: 15174281.4
(22) Anmeldetag: 29.06.2015
(51) Int. Cl.: F16L 55/035, E04D 13/08

(54) **HOCHSCHALLDÄMMENDE ROHRBEFESTIGUNGSVORRICHTUNG**
HIGHLY SOUND ABSORBING FASTENING DEVICE FOR PIPES
DISPOSITIF DE FIXATION DE TUBE INSONORISANT

(30) Priorität: 05.08.2014 DE 102014215394; 12.11.2014 DE 202014008983 U
(43) Veröffentlichungstag der Anmeldung: 10.02.2016
(73) Patentinhaber: Poloplast GmbH & Co. KG, 4060 Leonding (AT)
(72) Erfinder: MAYRBÄURL, Erwin, 4481 Asten (AT)
(74) Vertreter: Hoefer & Partner Patentanwälte mbB

(56) Entgegenhaltungen:
- EP-A1- 0 582 354
- EP-A1- 0 585 543
- EP-A1- 0 857 907
- EP-A1- 1 146 276
- FR-A1- 2 675 231

## Beschreibung

Die Erfindung betrifft eine hochschalldämmende Rohrbefestigungsvorrichtung nach dem Oberbegriff des Anspruchs 1.

Wenn Rohre oder Leitungen an einer Wand im wesentlichen in vertikaler Position angebracht werden, wie es beispielsweise bei Fallrohren für Regenwasser oder ähnlichen Rohren an vertikalen Wänden von Gebäuden der Fall ist, so ist es üblich, solche Rohre in einem gewissen Abstand zur Wand mittels einer Rohrschelle aufzuhängen, die in Form eines Metallstreifens ausgebildet ist und eine stoßdämpfende Zwischenlage aufweist.

Derartige Rohrschellen sind zum Beispiel aus der DE-34 39 418 A, EP-A-0 188 649 A, EP-A-0 387 966 A und DE-A-37 08 065 A bekannt.

Die Rohrschelle wird im allgemeinen mittels einer an ihr angeschweißten Mutter auf das freie Ende einer Gewindestange oder ähnlichem aufgeschraubt, die von der tragenden Wand vorsteht. Das Befestigen muss derart erfolgen, dass das Rohr infolge der Schwerkraft nicht durch die Befestigungsschelle hindurch herabsinken kann. Aus diesem Grunde ist es allgemeine Praxis, die Befestigungsschelle ziemlich fest um das Rohr zu klemmen. Hierdurch wird die Zwischenlage zwischen dem Rohr und der Rohrschelle derart zusammengepresst, dass die dämpfende Wirkung der Zwischenlage gegenüber (Schall-) Schwingungen innerhalb des Rohres (welche von hindurchfließendem Wasser verursacht werden) unzureichend wird. Der mit dem durch das Rohr fallenden Wasser verbundene Körperschall kann auf diese Weise leicht über die Rohrbefestigung in den Raum hinter der zugehörigen tragenden Wand übertragen werden.

Die EP-A-0 508 085 A zeigt ein Verfahren zum Befestigen eines Rohres an einer Wand in im Wesentlichen vertikaler Lage und in stoß- sowie schalldämpfender Weise. Insbesondere wird dabei eine spezielle Rohrschelle verwendet, welche aus einem rinnenförmigen Profil gebildet ist. Bei der Anwendung umgibt die Rohrschelle lose das Rohr, wobei das Rinnenprofil mit seiner Öffnung aufwärts gerichtet ist und stoßdämpfendes Material enthält, um den Kragen welcher auf dem Rohr befestigt ist elastisch abzustützen.

In der EP-582354 A sowie in der EP-1146276 A werden Vorrichtungen zur Befestigung von Rohren mit wenigstens einer das Rohr fest umspannenden Fixierschelle und einer das Rohr mit einer vorgegebenen Toleranz umgebenden Stützschelle dargestellt, welche an einer Wand oder einem Pfeiler befestigt ist und mit ihrer einen als Stützfläche ausgebildeten Stirnseite gegen eine axial gegenüberliegende, als Tragfläche ausgebildeten Stirnseite der Fixierschelle anliegt und dadurch über die Fixierschelle das Rohr trägt, wobei das Material wenigstens im Bereich der Stütz- und/oder der Tragfläche schalldämmende Eigenschaften aufweist und wobei die Fixierschelle und die Stützschelle jeweils aus einem steifen Schellenelement mit einem Elastomerelement besteht.

Die EP 857907 B1 offenbart ebenfalls eine ähnliche Lösung, aber mit dem Unterschied, dass die beiden Schellen über ein gummielastisches Element praktisch in einem Stück ausgeführt sind.

Durch den Kontakt beider Schellenelemente aufgrund des Gewichtes des Rohrstranges, wird bei den genannten Doppelschellenverfahren in Abhängigkeit der Gewichtsaufnahme ein unterschiedlich starker Kontakt der Elemente erreicht, welcher einen hohen Einfluss auf die Funktionsfähigkeit der Entkopplung zwischen Rohr und Montagewand erzeugt.

Prüfungen haben ergeben, dass Radialschwingungen eines Rohrstranges wesentlich stärker über die Rohrbefestigung in das Mauerwerk eingeleitet und in den Nachbarraum abgestrahlt werden, als Axialschwingungen. Die Radialschwingungen werden in Abhängigkeit des Kontaktes der Schellenelemente beziehungsweise der Verpressung des Elastomerelementes der oben genannten Lösungen ebenso in das Mauerwerk übertragen.

Die EP-585543 A betrifft ebenfalls eine Rohrbefestigungsvorrichtung mit einer ein Rohr fest umspannenden Fixierschelle und einer das Rohr mit einer vorgegebenen Toleranz umgebenden Stützschelle, welche an einem Gegenstand, insbesondere einer Wand befestigbar ist und mit ihrer einen als Stützfläche ausgebildeten Stirnseite gegen eine axial gegenüberliegende, als Tragfläche ausgebildete Stirnseite der Fixierschelle angedrückt ist und dadurch über die Fixierschelle das Rohr trägt, wobei das Material wenigstens im Bereich der Stütz- und/oder Tragfläche schalldämmende Eigenschaften hat und vorzugsweise gummielastisch ist.

Die FR 2 675 231 A1 offenbart eine Rohrbefestigungsvorrichtung nach dem Oberbegriff von Anspruch 1. Die Druckschrift zeigt eine Ringaufhängung eines Rohrs an einer Wand. Dabei wird das Rohr jeweils durch halbkreisförmige Halbschalen geklemmt. Die beiden so gebildeten Schellen sind durch kreisförmige Metallhalbschalen verbunden. Diese Verbindung erfolgt über elastomere Wände. Die Lagerung des Rohrs erfolgt dabei in horizontaler Ausrichtung. Der Erfindung liegt die Aufgabe zugrunde, eine Rohrbefestigungsvorrichtung der eingangs genannten Art zu schaffen, welche bei einfachem Aufbau und einfacher, kostengünstiger Herstellbarkeit eine hohe Schalldämmung und insbesondere eine Entkopplung von Radialschwingungen sicherstellt.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Fixierschelle und die Lagerschelle mittels zumindest einem konischen, flexiblen, biegeweichen und/oder elastischen Verbindungselement verbunden sind. Durch die Verwendung des flexiblen, konischen Verbindungselements, welches sich bevorzugt um den gesamten Umfang des Rohrs bzw. der Fixierstelle und der Lagerschelle erstreckt, erfolgt eine automatische Zentrierung, sodass vermieden wird, dass das Rohr Kontakt mit dem Trägerbauteil, beispielsweise einer Wand oder einer Strebe bekommt. Die größere Lagerschelle ist somit, bei einem vertikal angeordneten Rohr, oberhalb der Fixierschelle angebracht und umgibt das Rohr mit einer Toleranz, sodass die Lagerschelle mittels des zumindest einen konischen, flexiblen Verbindungselements an der Lagerschelle hängt. Unter dem Begriff flexibel wird erfindungsgemäß ein Material verstanden, welches elastisch, biegeweich und/oder biegbar ist. Bei einem Verbindungselement, welches in Form eines Streifens ausgebildet ist, bedeutet dies, dass dieser Streifen zumindest in Querrichtung seiner Längserstreckung elastisch oder biegbar oder biegeweich oder flexibel ausgebildet ist. Hierdurch wird insbesondere sichergestellt, dass Querschwingungen des Rohres nicht übertragen werden.

Gelöst wird die Aufgabe nach der Erfindung somit dadurch, dass die größere Lagerschelle und die am Rohr anliegende Fixierschelle über zumindest ein biegeweiches, gummiähnliches Verbindungselement verbunden werden. Dabei stützt sich die Fixierschelle nicht an der Lagerschelle ab, sondern hängt an dem biegeweichen gummielastischen Verbindungselement an der Lagerschelle. Dadurch wird der Rohrstrang eigenständig in das Zentrum der Lagerschelle zentriert und ein Kontakt zwischen der Lagerschelle und dem Rohr auch bei weniger professioneller Installationsweise verhindert.

Um den Anteil an übertragbaren Radialschwingungen zu senken, ist es vorteilhaft, den Winkel des konischen Verbindungselements zur Rohrachse kleiner als 45° zu wählen.

Nach einer bevorzugten Ausführungsform der Erfindung bestehen die Fixierschelle und die Lagerschelle jeweils aus zwei steifen Halbschellenelementen. Je 2 übereinanderliegende Halbschellenelemente sind mit einem biegeweichen, flexiblen, elastischen Elastomerelement (zum Beispiel aus der Werkstoffgruppe SBR, NBR, EPDM, Silikonkautschuk oder thermoplastische Elastomere) koaxial verbunden. Durch die Aufteilung der Schellen in zwei getrennte Elemente mit verschiedenen Materialeigenschaften kann zum einen die notwendige Festigkeit der Fixier- und der Lagerschelle erreicht werden, wobei gleichzeitig die zwischen den beiden Schellen benötigte schalldämmende Eigenschaft optimierbar ist. Es ist möglich, Elastomermischungen unter Einarbeitung von Schwerspat zu optimieren. Durch die Verwendung von beispielsweise gerippten oder genoppten Innenflächen der Elastomerelemente im Bereichen der steifen Elemente, werden die Kontaktflächen zwischen den Elastomeren und dem Rohr verkleinert, wodurch die schalldämmenden Eigenschaften weiter verbessert werden.

Auch eine Verwendung von mehreren unterschiedlich gefüllten Elastomersystemen ist möglich. Hierdurch kann über Dichte- und Härteunterschiede im Verbindungsband der übereinanderliegenden Schellenelemente der akustische Widerstand erhöht und somit eine zusätzlich Dämpfung der Schallenergie erreicht werden.

Das Elastomerelement kann kostengünstig im Spritzgießprozess gefertigt werden. Dabei ist es vorteilhaft, die steifen Elemente in ein Spritzgießwerkzeug einzulegen und das Elastomerelement im Montagespritzguss aufzubringen. Im Spritzgießprozess ist es möglich, Verstärkungsmaterial wie zum Beispiel Textilstreifen im Bereich der Bänder einzubringen, welche die Festigkeit der Bänder erhöhen, jedoch kaum Einfluss auf die Biegeweichheit haben. Zusätzlich kann der Materialeinsatz optimiert werden, da es ausreichend ist, jede Hälfte der Verbindungsschellen mit drei Berührungspunkten zum Rohr auszuführen. Ein durchgängiges Ummanteln der steifen Elemente ist nicht erforderlich.

Eine weitere kostengünstige Möglichkeit ist die Vorfertigung des Elastomerelementes im Extrusionsprozess mit anschließendem Beschnitt und Montage auf den steifen Elementen der Schellen.

Im Falle der Lagerschelle, die bei konzentrischer Anbringung das Rohr mit einer vorgegebenen Toleranz umgibt, verhindert das an der Innenseite angebrachte Elastomerelement bei einer radialen Verschiebung der Rohrachse den direkten Kontakt des steifen Schellenelements mit dem Rohr, der zu einer deutlichen Erhöhung der zur Mauer hin übertragenen Schallenergie führen würde.

Bevorzugt ist zumindest eines der steifen Schellenelemente aus Metall hergestellt. Dadurch kann eine einfache Herstellung bei gleichzeitiger Rohrstabilität gewährleistet werden.

Bevorzugt weist zumindest eines der steifen Schellenelemente ein im wesentlichen flachstabförmiges Profil auf. Durch diese handelsübliche Ausführungsform ist eine besonders kostengünstige Herstellung einer erfindungsgemäß ausgebildeten Rohrbefestigungsvorrichtung möglich.

Der Vorteil der Erfindung liegt somit unter anderem darin, dass die schalldämmende Wirkung der Rohrschelle unabhängig vom Verleger des Rohrsystems ist. Unterschiedliche Kontakte zwischen Stütz und Fixierschelle können nur über extrem exzentrische Montage des Rohrsystems erzeugt werden. Die elastischen Bänder werden jedoch das Rohrsystem weitestgehend in der Lagerschelle zentrieren. Auf diese Weise ist sowohl bei konzentrischer als auch bei nicht konzentrischer Anbringung der Lagerschelle die gewünschte Schalldämmung zwischen Rohr und Mauer bei einwandfreier Halterung gegeben.

Im Folgenden wird die Erfindung anhand eines Ausführungsbeispiels in Verbindung mit der Zeichnung beschrieben. Dabei zeigt die einzige Figur eine schematische Seitenschnittansicht der erfindungsgemäßen Rohrbefestigungsvorrichtung im montierten Zustand.

Dabei zeigt:
- Fig. 1: eine schematische Schnittansicht eines ersten Ausführungsbeispiels der erfindungsgemäßen Rohrbefestigungsvorrichtung,
- Fig. 2: eine perspektivische Ansicht der in Fig. 1 gezeigten Rohrbefestigungsvorrichtung, und
- Fig. 3: eine perspektivische Ansicht eines weiteren erfindungsgemäßen Ausführungsbeispiels.

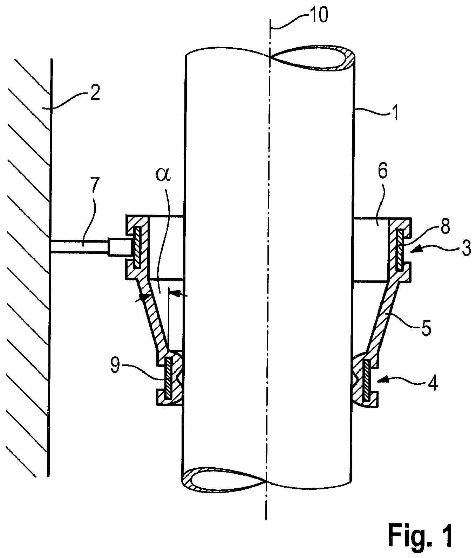

Die Fig. 1 zeigt in schematischer Längsschnittdarstellung ein Rohr 1, welches vertikal angeordnet ist. In einem Abstand zum Rohr 1 ist ein Trägerbauteil 2, beispielsweise in Form einer Wand, dargestellt.

Das Rohr wird durch eine Fixierschelle 4 fest umspannt. Die Fixierschelle 4 kann halbschalenartig ausgebildet sein, sie kann jedoch auch in elastischer Weise einstückig ausgestaltet sein. In ihrem Inneren ist in der Fixierschelle 4 ein metallisches, flachbandartiges Schellenelement 9 angeordnet, durch welches die Fixierschelle 4 gespannt wird. Die Fixierschelle 4 ist an ihrer radial inneren Seite mit einem elastischen Material versehen, sodass das Schellenelement 9 durch das elastische Material umschlossen ist.

Bei der vertikalen Anordnung, welche in der Figur gezeigt ist, ist oberhalb der Fixierschelle 4 eine Lagerschelle 3 angeordnet, welche einen Durchmesser aufweist, der größer ist, als der Außendurchmesser des Rohrs 1, sodass sich eine Toleranz 6 ergibt. Somit wird verhindert, dass das Rohr 1 sich in direktem Kontakt mit der Lagerschelle 3 befindet. Auch die Lagerschelle 3 umfasst ein metallisches, flachbandartiges Schellenelement 8, welches an zumindest einer dem Trägerbauteil 2 zugewandten Seite mittels einer Befestigungsvorrichtung 7 mit dem Trägerbauteil 2, beispielsweise einer Wand, verbunden ist.

Auch die Lagerschelle 3 kann halbschalenartig ausgebildet sein, so wie dies beispielsweise aus der Fixierschelle 4 vorbekannt ist.

Erfindungsgemäß sind die Lagerschelle 3 und die Fixierschelle 4 mittels zumindest einem konischen, flexiblen oder biegeweichen oder elastischen Verbindungselement 5 verbunden. Die Fixierschelle 4 hängt somit bei der vertikalen Anordnung gemäß dem Ausführungsbeispiel an der Lagerschelle 3. Der Winkel α zeigt den Konuswinkel, welcher ≤ 45 ° ist.

Bei dem Ausführungsbeispiel ist sowohl das Schellenelement 8 als auch das Schellenelement 9 jeweils von dem Material umschlossen, welches auch das konische Verbindungselement 5 bildet. Hierdurch ergibt sich eine sehr einfache Herstellbarkeit, so wie dies obenstehend erläutert wurde.

Das Rohr 1 hängt somit, gehalten durch die Fixierschelle 4 mittels des Verbindungselements 5 an der Lagerschelle 3.

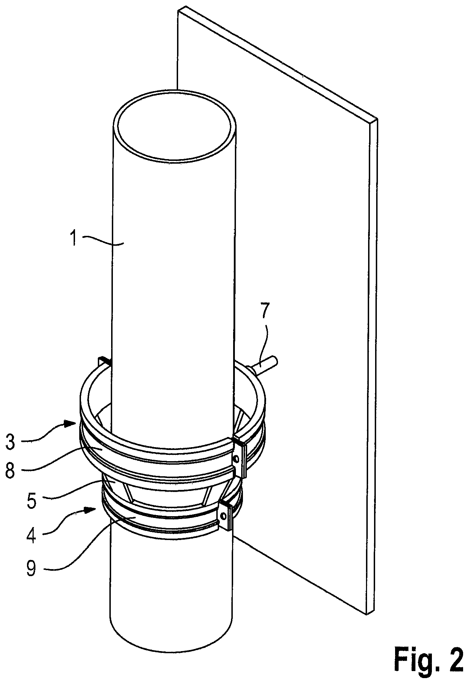

Das Verbindungselement 5 kann so ausgebildet sein, dass es als konische Halbschale gefertigt ist, es ist jedoch auch möglich, mehrere um den Umfang verteilte Bänder anzuordnen, sodass sich Zwischenräume ergeben, aus denen beispielsweise eintretende Flüssigkeiten oder Festkörper entfernt werden können, um die Entkoppelung des Rohrs 1 von der Lagerschelle 3 sicherzustellen. Eine derartige Ausgestaltung ist insbesondere in Fig. 2 ersichtlich. Bei dieser Variante erstrecken sich um den Umfang nur einzelne streifenförmige Verbindungselemente 5. Das Ausführungsbeispiel zeigt eine extrudierte Version, bei welcher ausgestanzte Bänder (Schellenelemente 8, 9) verwendet werden. Wie aus den Fig. 1 und 2 ersichtlich ist, sind die Schellenelemente 8, 9 jeweils an ihrer Innenseite (rohrseitig) vollständig von dem elastischen, biegeweichen Material umhüllt.

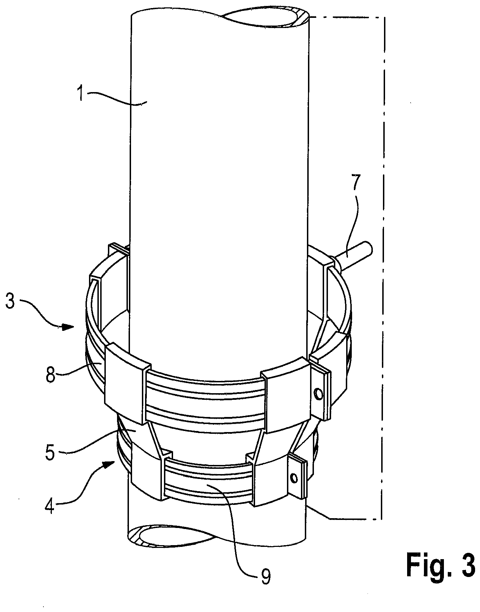

Die Fig. 3 zeigt eine Ausgestaltungsvariante, bei welcher Stahlschellen mit Schellenelementen 8, 9 in einem Spritzgussverfahren partiell an vorgegebenen Bereichen ummantelt werden. Die Ummantelung mittels des elastischen, biegeweichen Materials umschließt oder umgreift die gesamten Schellenelemente 8, 9, so wie dies in Fig. 3 dargestellt ist. Hierdurch erfolgt eine sichere Verankerung der Fixierschelle 4, welche im montierten Zustand an der Lagerschelle 3 mittels der Verbindungselemente 5 hängt.

### Bezugszeichenliste

- 1: Rohr
- 2: Trägerbauteil
- 3: Lagerschelle
- 4: Fixierschelle
- 5: Verbindungselement
- 6: Toleranz
- 7: Befestigungsvorrichtung
- 8: Schellenelement
- 9: Schellenelement
- 10: Rohrachse

## Patentansprüche

1. Rohrbefestigungsvorrichtung mit einer ein Rohr (1) fest umspannbaren Fixierschelle (4) und einer das Rohr (1) mit einer vorgegebenen Toleranz (6) umgebbaren Lagerschelle (3), welche in einem axialen Abstand zu der Fixierschelle (4) angeordnet ist und an einem Trägerbauteil (2) befestigbar ist, wobei die Fixierschelle (4) mittels zumindest einem konischen, flexiblen Verbindungselement (5) mit der Lagerschelle (3) verbunden ist, wobei das Verbindungselement (5) zur Rohrachse (10) biegeweich ausgebildet ist, und wobei die Fixierschelle (4) im montierten Zustand mittels des Verbindungselements (5) hängend an der Lagerschelle (3) anordenbar ist,
wobei die Fixierschelle (4) und die Lagerschelle (3) jeweils ein steifes Schellenelement (8, 9) umfassen, welches jeweils mit dem Verbindungselement (5) verbunden ist, und
wobei das Verbindungselement (5) entlang der Rohrachse (10) zwei gegenüberliegende Endbereiche aufweist, **dadurch gekennzeichnet, dass** das Schellenelement (8) der Lagerschelle (3) an einem der zwei Endbereiche und das Schellenelement (9) der Fixierschelle (4) am anderen der zwei Endbereiche angeordnet sind.

2. Rohrbefestigungsvorrichtung nach Anspruch 1, **dadurch gekennzeichnet,**
**dass** die Fixierschelle (4) und die Lagerschelle (3) als Halbschalen ausgebildet sind.

3. Rohrbefestigungsvorrichtung nach einem der Ansprüche 1 oder 2, **dadurch gekennzeichnet, dass** das Verbindungselement (5) als konische Halbschale ausgebildet ist.

4. Rohrbefestigungsvorrichtung nach Anspruch 1 oder 2, **dadurch gekennzeichnet, dass** das Verbindungselement (5) in Form mehrerer bandartiger, um den Umfang verteilt angeordneter Teilelemente ausgebildet ist.

5. Rohrbefestigungsvorrichtung nach einem der Ansprüche 1 bis 4, **dadurch gekennzeichnet, dass** der Konuswinkel α, bezogen auf die Mittelachse der Fixierschelle (4) und der Lagerschelle (5) ≤ 45° beträgt.

6. Rohrbefestigungsvorrichtung nach einem der Ansprüche 1 bis 5, **dadurch gekennzeichnet, dass** das Schellenelement (8) der Lagerschelle (3) und das Schellenelement (9) der Fixierschelle (4) metallische Schellenelemente sind.

7. Rohrbefestigungsvorrichtung nach einem der Ansprüche 1 bis 6, **dadurch gekennzeichnet, dass** die Fixierschelle (4) an ihrer radial innenliegenden Seite elastisch ausgebildet ist.

8. Rohrbefestigungsvorrichtung nach einem der Ansprüche 1 bis 7, **dadurch gekennzeichnet, dass** das Verbindungselement (5) aus mehreren unterschiedlichen Elastomeren mit unterschiedlicher Dichte und Härte gefertigt ist.

9. Rohrbefestigungsvorrichtung nach einem der Ansprüche 1 bis 8, **dadurch gekennzeichnet, dass** das Verbindungselement (5) Verstärkungsgewebe enthält.

## Claims

1. Pipe securing apparatus with a fixing clamp (4) capable of rigidly encircling a pipe (1) and a bearing clamp (3) capable of enclosing the pipe (1) with a predetermined tolerance (6), said bearing clamp (3) being arranged at an axial distance from the fixing clamp (4) and capable of being secured to a carrier component (2), wherein the fixing clamp (4) is connected to the bearing clamp (3) by means of at least one conical, flexible connecting element (5), wherein the connecting element (5) is flexurally soft in respect of the pipe axis (10), and wherein the fixing clamp (4) in the mounted state can be arranged by means of the connecting element (5) suspended from the bearing clamp (3),
wherein the fixing clamp (4) and the bearing clamp (3) each enclose a stiff clamp element (8, 9) which is connected respectively to the connecting element (5), and wherein the connecting element (5) has two opposing end regions along the pipe axis (10), **characterised in that** the clamp element (8) of the bearing clamp (3) is arranged at one of the two end regions and the clamp element (9) of the fixing clamp (4) is arranged at the other of the two end regions.

2. Pipe securing apparatus according to claim 1, **characterised in that** the fixing clamp (4) and the bearing clamp (3) are constructed as half-shells.

3. Pipe securing apparatus according to any one of claims 1 or 2, **characterised in that** the connecting element (5) is constructed as a conical half-shell.

4. Pipe securing apparatus according to claim 1 or claim 2, **characterised in that** the connecting element (5) is provided in the form of a plurality of strip-type part-elements distributed around the periphery.

5. Pipe securing apparatus according to any one of claims 1 to 4, **characterised in that** the cone angle α is ≤ 45° in respect of the central axis of the fixing clamp (4) and the bearing clamp (5).

6. Pipe securing apparatus according to any one of claims 1 to 5, **characterised in that** the clamp element (8) of the bearing clamp (3) and the clamp element (9) of the fixing clamp (4) comprise metallic clamp elements.

7. Pipe securing apparatus according to any one of claims 1 to 6, **characterised in that** the fixing clamp (4) is elastic in design on its radially inside face.

8. Pipe securing apparatus according to any one of claims 1 to 7, **characterised in that** the connecting element (5) is manufactured from a plurality of different elastomers of differing densities and hardness.

9. Pipe securing apparatus according to any one of claims 1 to 8, **characterised in that** the connecting element (5) contains reinforcing fabric.

## Revendications

1. Dispositif de fixation de tube avec un collier de fixation (4) pouvant enserrer fixement un tube (1) et un collier de palier (3) pouvant entourer le tube (1) avec une tolérance prédéfinie (6), lequel est agencé à une distance axiale du collier de fixation (4) et peut être fixé à un élément support (2), dans lequel le collier de fixation (4) est relié au collier de palier (3) au moyen d'au moins un élément de liaison (5) souple, conique, dans lequel l'élément de liaison (5) est réalisé souple à la flexion par rapport à l'axe de tube (10), et dans lequel le collier de fixation (4) peut être agencé à l'état monté de manière suspendue au collier de palier (3) au moyen de l'élément de liaison (5), dans lequel le collier de fixation (4) et le collier de palier (3) comprennent respectivement un élément de collier rigide (8, 9), lequel est relié respectivement à l'élément de liaison (5), et dans lequel l'élément de liaison (5) présente deux zones d'extrémité opposées le long de l'axe de tube (10), **caractérisé en ce que** l'élément de collier (8) du collier de palier (3) est agencé à une des deux zones d'extrémité et l'élément de collier (9) du collier de fixation (4) est agencé à l'autre des deux zones d'extrémité.

2. Dispositif de fixation de tube selon la revendication 1, **caractérisé en ce que** le collier de fixation (4) et le collier de palier (3) sont réalisés en tant que demi-coques.

3. Dispositif de fixation de tube selon l'une quelconque des revendications 1 ou 2, **caractérisé en ce que** l'élément de liaison (5) est réalisé en tant que demi-coque conique.

4. Dispositif de fixation de tube selon la revendication 1 ou 2, **caractérisé en ce que** l'élément de liaison (5) est réalisé sous forme de plusieurs éléments partiels de type bande agencés sur la périphérie.

5. Dispositif de fixation de tube selon l'une quelconque des revendications 1 à 4, **caractérisé en ce que** l'angle de cône α, par rapport à l'axe médian du collier de fixation (4) et du collier de palier (5) est ≤ 45°.

6. Dispositif de fixation de tube selon l'une quelconque des revendications 1 à 5, **caractérisé en ce que** l'élément de collier (8) du collier de palier (3) et l'élément de collier (9) du collier de fixation (4) sont des éléments de collier métalliques.

7. Dispositif de fixation de tube selon l'une quelconque des revendications 1 à 6, **caractérisé en ce que** le collier de fixation (4) est réalisé de manière élastique sur son côté radialement intérieur.

8. Dispositif de fixation de tube selon l'une quelconque des revendications 1 à 7, **caractérisé en ce que** l'élément de liaison (5) est réalisé en plusieurs élastomères différents de différente densité et dureté.

9. Dispositif de fixation de tube selon l'une quelconque des revendications 1 à 8, **caractérisé en ce que** l'élément de liaison (5) contient un tissu de renforcement.
